# EUROPEAN PATENT SPECIFICATION

(11) **EP 1 292 197 B1**
(45) Date of publication and mention of the grant of the patent: **09.08.2006**
(21) Application number: 01929909.8
(22) Date of filing: 21.05.2001
(51) Int. Cl.: A23L 1/0522, A23P 1/06, C08B 30/14

(54) **THICKENER PREPARATION FOR FOOD AND PROCESS FOR THE PRODUCTION THEREOF**
VERDICKUNGSMITTEL FÜR SPEISEN UND VERFAHREN ZU SEINER HERSTELLUNG
PREPARATION EPAISSISSANTE POUR ALIMENTS ET SON PROCEDE DE PRODUCTION F

(30) Priority: 05.06.2000 EP 00111793
(43) Date of publication of application: 19.03.2003
(73) Proprietor: SOCIETE DES PRODUITS NESTLE S.A., 1800 Vevey (CH)
(72) Inventor: MOOSER, Oswaldo, CH-8400 Winterthur (CH)
(74) Representative: Thomas, Alain
(86) International application number: PCT/IB2001/000881
(87) International publication number: WO 2001/093693

(56) References cited:
- EP-A- 0 118 753
- GB-A- 720 318
- US-A- 5 291 877
- US-A- 5 536 156
- US-A- 5 795 606
- ELIASSON A -C ET AL: "On the possibility of modifying the gelatinization properties of starch by lipid surface coating." STARCH STARKE., vol. 33, no. 7, pages 231-235, XP002153563 WILEY-VCH VERLAG, WEINHEIM., DE ISSN: 0038-9056

## Description

The present invention relates to an amylaceous thickener or binder preparation for food products which is dispersible in hot aqueous liquids such as water, milk, etc., as well as to a process for the production of such thickener.

The culinary use of starches of cereals, tubers or other starchy materials as binders or thickeners, particularly in the preparation of sauces and soups, is very often difficult and problematic. This is because it is not easy to control the gelatinization rate and the thickening power of starches. When it is attempted, for example, to disperse a starch either on its own or in admixture with other ingredients, which are themselves dispersible in boiling water, by pouring directly into boiling water while stirring, it is generally not possible to avoid the formation of lumps.

Various processes have been proposed with a view to improving the dispersibility of starches in boiling water, but up to now none of them has given sufficiently satisfying results in practice.

Some of the known processes are based on the heat treatment of the starch, possibly in presence of an emulsifier, so as to increase the gelatinization temperature of the starch (see for example EP-A-0 150 715 of the same applicant).

Other methods are based on the principle of making the starchy products "water repellent" for the time required to dispense the individual starchy particles, this by coating said products with fat. Such fat based thickeners are known for example having a fat content of upto about 40%.

However, even if these methods are relatively satisfying as to the increase of dispersibility of the starchy products thus coated, there is now a strong need to reduce the amount of fat, since fat is not at all welcome in food and is increasing the cost of the raw material.

The purpose of the present invention is thus to provide treated starchy products which could be used in foods as thickener, and having a good dispersibility in hot aqueous liquids so as to avoid the formation of lumps, but which have not such a high fat content like the ones of those treated by the above-mentioned method.

Now it has been surprisingly found by the present inventors that a new type of dispersible starchy products, usable as thickeners for food, can be obtained by coating them with stearates, more particularly with alkaline or alkaline-earth stearates, such as magnesium or calcium stearates, which are known as dry lubricating agents especially in the pharmaceutical industry, more particularly in the manufacture of pills.

Therefore, a first object of this invention, leading to reach the above purpose, is to provide a dispersible starchy thickener for food as claimed in claim 1, which comprises an amylaceous product in powder form which is coated with an alkaline or alkaline-earth stearate, the weight percentage of said stearate being not higher than 2.0 wt% of the preparation.

A second object of the present invention is consisting in a process for the production of the above thickener, which comprises mixing the amylaceous product in powder from with not more than 2.0 wt% of alkaline or alkaline-earth stearate, at a temperature of 30 to 210°C, grinding and sieving the preparation thus obtained. The effective temperature can be selected within the above range according to the mixing means used.

The amylaceous product is potato starch, wheat flour, maize starch, rice flour, as well as modified potato or maize starch, and the mixtures thereof.

In the present invention, alkaline and alkaline-earth stearates are usable as coating material, but more particularly magnesium or calcium stearate are the most commonly preferred, as well as sodium stearate in a lesser extend.

Regarding more particularly the amount of stearate to be used for coating the starchy product, it should not be higher than 2.0 wt%, otherwise the organoleptic properties of the food could be altered, i.e. by producing preparations with a sandy mouth feel, also with a possible perception of a "chemical" or "soapy" taste, and the aim of not increasing the fat content not reached.

It has further been found that the stearate proportion to be used is depending from several factors, especially the nature, grain size and humidity of the basic starchy product, as well as the type of stearate itself, the amount needed being for example generally lower for Ca-stearate than for Mg-stearate. This proportion is also depending from the experimental conditions of the preparation method, and more particularly of the extrusion temperature, as well as of the dispersing temperature required.

However, and within the ranges defined and given in the specification and claims, it is up to the man skilled in the art to finally select the best conditions in agreement with the particular aim seeked.

By way of examples, the preferred weight proportions of stearate to be used according to the present invention are generally comprised between 0.3 and 2.0 wt%, but preferably of 0.3 to 0.75 wt% for Ca-stearate and of 0.5 to 1.5 wt% for Mg-stearate, in the case of potato starch, whereas 0.5 to 1.5 wt% of Mg-stearate or 0.5 to 1.0 wt% of Ca-stearate will be required for maize starch.

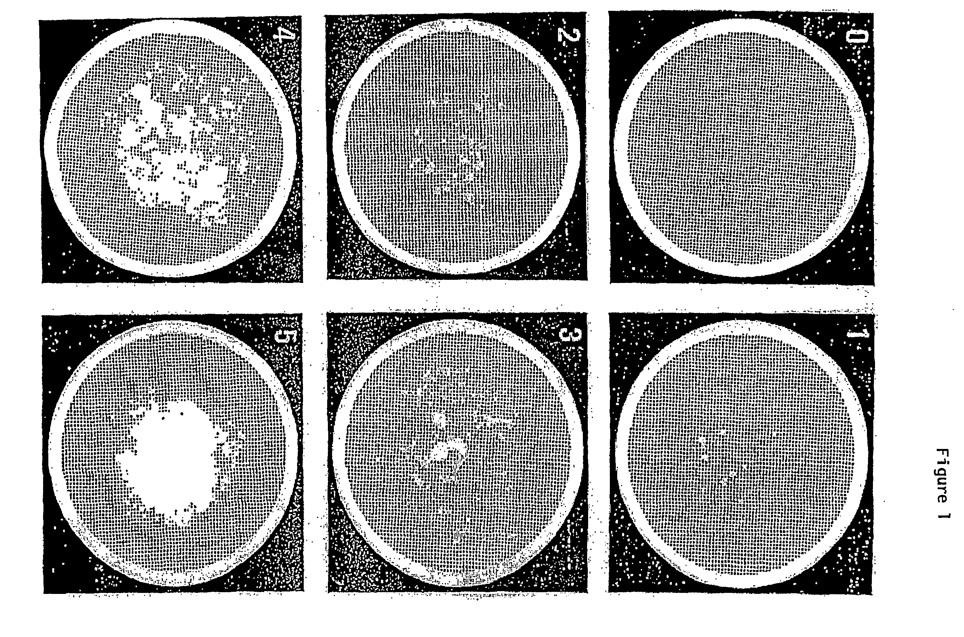

The dispersibility of the thickeners according to the present invention was estimated by a practical test as follows : 15 to 25 g of the products to be tested (in the form of a powder having previously been sieved through a 1 mm mesh sieve) were vigorously whisked into about 500 ml of water at the desired temperature (i.e. 80°C and 90°C) during about 15 sec., and the mixture was left 1 min standing; the mixture was then stirred shortly and passed through a sieve (about 1 mm mesh wide), and the lumps still present in the mixture thus retained on the sieve were shortly rinced with cold water and then visually rated according to a scale (index 1 to 5) shown on annexed Figure 1. It is to be considered that a test result upto about 3 would be acceptable to have a good dispersibility in hot water.

Regarding the process for the production of the thickener according to the invention, it can be carried out by using an extruder, a mixer-extruder, a mixer (for example of the type "Lödige"), or a rotary paddle reactor.

The following types of starchy products have been tested as raw material : dried potato starch (DM ca. 95%), dried wheat flour (DM ca. 94%), dried maize starch (DM ca 88-98%), modified maize starch ("Hi Flo" and "Colflo 67" of National Starch), modified potato starch ("Farinex VA" of Avebe), and rice flour. For some experiments, the starchy product was previously either further dried (in vacuum oven) or humidified.

Tests have also been carried out by adding to the stearate upto about 5 wt% of fat and/or emulsifier, so as further improve the dispersibility of the starchy product in particular cases.

In the following Examples, various types of starchy products have been treated by the process according to the present invention, so as to produce a thickener which is well dispersible in hot water, and various types of mixing means have been experimented.

### Example 1 : Potato starch

Mixtures having the compositions mentioned in Table 1 have been submitted to an extruder at various barrel temperatures. As further conditions, the screw speed was of 50-60 rpm for the tests with Mg-stearate and of 80-100 rpm for those with Ca-stearate, and the feed of the mixture into the extruder of about 20kg/h. The extruder used was a "Werner & Pfleiderer WP 37" with 6 elements of 16 cm length each and a screw length of 1 m. This type of extruder has no die, i.e. it is open at the outlet.

The extruder was fed with a dry mix of stearate and starch of specific composition. The respective mixes were previously made of 10 to 20 kg batches by simply thoroughly mixing the components.

Various processing parameters have been used, but the residence time of the mixes in the extruder was of about 30 to 60 sec. For each trial, product samples were taken at different extrusion temperatures; more particularly, the samples were taken after about a ten minutes delay after the barrel has reached the specific temperature.

The extrusion temperature generally ranges from about 130°C to about 210°C, but more particularly from 150 to 190°C with potato starch, and from 130 to 170°C with high moisture maize starch, 170° to 190°C with medium moisture maize starch and 190 to 210°C with dry maize starch.

As described before, the product samples thus obtained were tested in hot water and the presence of formed lumps visually estimated on the scale of Figure 1. The results obtained have been reported in the following Table 1, which shows that a good dispersibility of this thickener based on potato starch can be obtained with 1.5-2.0% of Mg-stearate at a barrel temperature of about 150°C and with 0.5% Mg-stearate at higher barrel temperatures (160-170°C).

On the other hand, it has also been shown that Ca-stearate has a better "instantisation" action on potato starch than Mg-stearate, since a very good dispersibility can be obtained with 0.5% Ca-stearate at a barrel temperature of 150°C and with 0.3% Ca-stearate at 170-190°C.

**Table 1 : Potato starch**

| Mg-stearate (%) | Ca-stearate (%) | Barrel temperat. (°C) | Lumps at | |
|---|---|---|---|---|
| | | | 80°C | 90°C |
| 2.0 | | 150 | 0-1 | 1 |
| 1.5 | | 150 | 1 | 1 |
| 0.5 | | 170 | 1 | 1-2 |
| | 0.5 | 150 | 0 | 0-1 |
| | 0.5 | 170 | 0-1 | 0-1 |
| | 0.5 | 190 | 0 | 0 |
| | 0.3 | 150 | 0-1 | 1 |
| | 0.3 | 170 | 0 | 0-1 |
| | 0.3 | 190 | 0-1 | 1 |

### Example 2 : Wheat flour

Tests were carried out in the same conditions than those of Example 1, but with mixtures of wheat flour and Mg-respectively Ca-stearate. The extruded products have given "lump ratings" which are reported in the following Table 2, and which show a less good dispersibility than the corresponding samples based on potato starch.

**Table 2 : Wheat flour**

| Mg-stearate (%) | Ca-stearate (%) | Barrel temperat. (°C) | Lumps at 80°C |
|---|---|---|---|
| 2.0 | | 170 | 2-3 |
| 2.0 | | 190 | 2-3 |
| | 2.0 | 170 | 3 |
| | 2.0 | 190 | 2 |

### Example 3 : Wheat flour / potato starch mixtures

Still using the same conditions, mixtures of wheat flour and potato starch have been experimented, containing about 25% starch. The results are reported in Table 3, and show that experiments with less than 2.0% Mg-stearate are not as good as those with 2% Mg-stearate in the case of only wheat flour.

**Table 3 : wheat flour / potato starch mixtures**

| Mg-stearate (%) | Ca-stearate (%) | Barrel temperat. (°C) | Lumps at 80°C |
|---|---|---|---|
| 1.5 | | 170 | 3-4 |
| 1.5 | | 190 | 3 |
| | 1.5 | 150 | 3 |
| | 1.5 | 170 | 2-3 |
| | 1.5 | 190 | 2 |

### Example 4 : Maize starch

The experiments carried out with this type of starch have shown on one hand that in general more stearate is needed than with potato starch, because of the larger specific surface offered by the smaller maize starch granules, and on the other hand that the conditions needed to produce maize starch dispersible in hot water (at 90°C) depend on the moisture content of the starch used in the premix fed to the extruder (screw speed of 120 rpm and feed of 10kg/h).

The results obtained have been reported on the following Table 4 (maize starch and Mg-stearate) and Table 5 (maize starch and Ca-stearate). It is to be pointed out, especially from Table 4, that a good dispersibility in hot water is more difficult to get with a medium moisture starch (6-8% humidity) than with a high moisture starch (10-12% humidity) or with a low moisture (or dry) starch (2-4% humidity), this also depending on the barrel temperature. This can be explained by the fact that at the lower barrel temperatures, the stearate coating is insufficient to counteract the increased lumping tendency brought about by the relatively low moisture content, whereas at the higher barrel temperatures the moisture is sufficient to create a vapour pressure capable of hindering the coating with the hydrophobic stearate.

**Table 4 : Maize starch and Mg-stearate**

| Starch humidity (%) | Mg-stearate (%) | Barrel temperat. (°C) | Lumps at 90°C |
|---|---|---|---|
| 2 | 0.75 | 210 | 1 |
| 4 | 0.75 | 170 | 2 |
| 4 | 0.75 | 190 | 1-2 |
| 4 | 0.75 | 210 | 2 |
| 7 | 0.75 | 150 | 3 |
| 7 | 1.0 | 170 | 1-2 |
| 7 | 1.0 | 190 | 2-3 |
| 10 | 0.75 | 130 | 1 |
| 10 | 0.75 | 150 | 1 |
| 10 | 0.75 | 170 | 1 |
| 10 | 1.0 | 190 | 1 |
| 10 | 1.5 | 190 | 0-1 |

**Table 5 : Maize starch and Ca-stearate**

| Starch humidity (%) | Ca-stearate (%) | Barrel temperat. (°C) | Lumps at 90°C |
|---|---|---|---|
| 7 | 0.75 | 130 | 2-3 |
| 7 | 0.75 | 150 | 1 |
| 7 | 1.0 | 130 | 1 |
| 7 | 1.0 | 150 | 1 |
| 7 | 1.0 | 170 | 1 |

### Example 5 : Modified potato and maize starches

Further experiments have been made by using modified potato starch ("Farinex VA15", with about 11 % humidity) and modified maize starches ("Hi flo" and "Colflo 67", with 6-8% humidity).

The results which have been reported on the following Table 6 are showing that the dispersibility obtained is acceptable with the conditions specified.

**Table 6 : Modified potato and maize starches**

| **Starch** | **Mg-stearate (%)** | **Ca-stearate (%)** | **Barrel temp. (°C)** | **Lumps at** | |
|---|---|---|---|---|---|
| | | | | **80°C** | **90°C** |
| Hi-Flo | 0.75 | | 190 | | 2 |
| Colflo | 0.75 - 1.0 | | 190-210 | | 3 |
| Hi-Flo | | 0.75 | 130-170 | 1-2 | 3 |
| Hi-Flo | | 1.0 | 190-210 | 1-2 | 3 |
| Colflo | | 1.0 | 170 | 1-2 | 3-4 |
| Farinex | 0.5 | | 150-210 | 0-1 | 2-3 |
| Farinex | | 0.3 | 130 | 0-1 | 2-3 |

### Example 6 : Addition of fat and/or emulsifier

In certain cases, it has appeared to be appropriate, or even advantageous, to add to the stearate small amounts (upto about 5 wt%) of a fatty product (such as triglycerides, hydrogenated palm fat, etc) and/or an emulsifier (such as lecithin, monoglycerine stearate, etc).
(a) Trials have been made for example of mixing potato starch with 2 wt% Mg-stearate in a mixer (of the type "Lödige") without heating the mixture (mixing carried out at about 33°C), and during about 30 min.
   The result obtained have shown that the hot dispensibility of the potato starch can be increased from a "lumps index" of 2 upto a "lump index" of 1 by adding to the mixture 5 wt% of hydrogenated palm fat.
(b) The coating effect of the stearate can further be improved by the addition of such small amounts (max. 5%) of an emulsifier, or of a mixture of fat and emulsifier, especially with amylaceous products for which the coating effect is more difficult to obtain, like for example with wheat flour.

### Example 7 :

For examples 7 and 8, high performances mixers have been used, instead of an extruder, under temperature conditions between 30 and 150°C, preferably 50 to 100°C.

More particularly the mixer used in this Example was a "Lödige M 20 G" mixer (20 I total volume) equipped with ploughshare type blades, a chopper and a jacket. The rotor turned at 220 rpm.

**Table 7 : Potato starch coated with magnesium stearate**

| Duration (min.) | Mg-Stearate content (%) | Jacket temp. (°C) | Product temp. at end (°C) | Lump rating (dispersibility at 80°C) |
|---|---|---|---|---|
| 10 | 2.00 | 150 | 93.8 | 1 - 2 |
| 30 | 0.75 | 50 | 50.4 | 2 |
| 30 | 2.00 | 50 | 50.2 | 1 - 2 |
| 20 | 1.38 | 100 | 85.5 | 1 - 2 |

Since the end temperature of the product in the mixer never attained the ca. 150°C required for melting the stearate, starch coating was achieved here only by mechanical spreading of the stearate over the surface of the starch particles, i.e. taking advantage of the lubrificating property of the stearate. This is also indicated by Table 7 that shows that the mixing time and the stearate concentration have a significant effect on the dispersibility of the thickener produced.
As an example, it can be said that a starch mix containing 1 % to 2% of magnesium stearate will produce a thickener of good dispersibility in water of 80°C after processing for 25 to 30 minutes at 50°C in the Lödige mixer.

### Example 8 :

The mixer used in this Example was a "Lödige FM 130D/1Z" mixer (130 I total volume) equipped with ploughshare type blades, a chopper and a jacket. The rotor turned at 190 rpm.

**Table 8 : Potato starch and Ca-Stearate**

| Duration (min.) | Stearate content (%) | Jacket temp. (°C) | Product temp. at end (°C) | Mean lump rating at | |
|---|---|---|---|---|---|
| | | | | 80°C | 90°C |
| 10 | 2.00 | 150 | 74.2 | 0 | 0 - 1 |
| 30 | 0.75 | 50 | 42.5 | 0 - 1 | 2 - 3 |
| 30 | 2.00 | 50 | 43.5 | 0 | 0 - 1 |
| 10 | 2.00 | 50 | 37.7 | 0 | 1 - 2 |
| 20 | 1.38 | 100 | 69.1 | 0 - 1 | 2 - 3 |

These results confirm the previous ones in Example 7 and demonstrate that Ca-stearate is more performing than Mg-stearate regarding the dispersibility of the coated starchy materials.

### Example 9 :

Surprisingly it was also found that rotary-paddle reactors are suitable for the production of hot dispersible starchy materials coated with stearates. The temperature range is comprised with such apparatus between about 100 and 180°C.

Coating is thus possible in a jacketed rotary-paddle reactor, for instance in a "TM/220" model form the VOMM Impianti e Processi Sr., Milano. Using such an apparatus, the results set out in Table 9 were obtained using a mix of 99,2% of potato starch of dry matter 94,6% (i.e. humidity of 5.4%) mixed with 0.8% of Mg-stearate.

**Table 9 : Potato starch in reactor**

| Feed (kg/h) | Jacket temp. (°C) | Rotational speed of rotor (rpm) | Lump rating at | | Product moisture |
|---|---|---|---|---|---|
| | | | 80°C | 90°C | |
| 30 | 100 | 1000 | 0 - 1 | 1 - 2 | 95.6 |
| 30 | 180 | 1000 | 0 - 1 | 1 - 2 | 97.3 |
| 50 | 100 | 1500 | 1 | 2 - 3 | 94.4 |
| 50 | 180 | 1500 | 0 - 1 | 2 | 94.3 |
| 70 | 140 | 1500 | 1 - 2 | 1 - 2 | 96.4 |

The above Table shows that coating of starchy materials with stearates in a rotary-paddle reactor can be done under a large variety of conditions to obtain hot dispersible products. Especially, the process can be carried out here at temperatures of 100°C.

Therefore, according to the needs, the man skilled in the art can choose the conditions suitable to the aimed purpose, for instance to obtain a proper dispersibility and a specific dry matter of the product. As an example of operation, it can be mentioned that a starch with a hot dispersiblity rating of 1 at 80°C may be prepared choosing the following conditions for the reactor: Rpm = 1500, feed = 50kg/h and jacket temperature = 100°C.

## Claims

1. Thickener preparation for foods comprising an amylaceous product in powder form which is coated with an alkaline or alkaline-earth stearate, the weight percentage of said stearate being not higher than 2.0 wt% of the preparation, in which the amylaceous product is potato starch, modified potato starch, maize starch, modified maize starch, wheat flour, rice flour, or a mixture thereof.

2. Thickener according to claims 1 , in which the stearate is magnesium stearate or calcium stearate.

3. Thickener according to one of claims 1 or 2 , which comprises 0.5 to 1.5 wt% of Mg-stearate or 0.3 to 0.75 wt% of Ca-stearate, when the amylaceous product is potato starch.

4. Thickener according to one of claims 1 or 2 , which comprises 0.5 to 1.5 wt% of Mg-stearate or 0.5 to 1.0 wt% of Ca-stearate, when the amylaneous product is maize starch.

5. Thickener according to one of claims 1 to 4. which further comprises up to about 5 wt% of fat and/or emulsifier.

6. Process for the production of the thickener preparation according to one of claims 1 to 5, which comprises mixing the amylaceous product in powder form with not more than 2.0 wt% of alkaline or alkaline-earth stearate, at a temperature of 30 to 210°C, grinding and sieving the preparation thus obtained.

7. Process according to claim 6, in which the mixing is carried out in an extruder at a temperature of 130 to 210 °C.

8. Process according to claim 7 for the production of a thickener preparation as defined in claim 4, in which the temperature is of 150 to 190°C.

9. Process according to claim 7 for the production of a thickener preparation as defined in claim 5, in which the temperature is of 190 to 210°C for a dry maize starch, of 170 to 190°C for a medium moisture maize starch and of 130 to 170°C for a high moisture starch.

10. Process according to claim 6, in which the mixing is carried out in a mixer at a temperature of 30 to 150°C, preferably of 50 to 100°C, or in a rotary paddle reactor at a temperature of 100 to 180°C.

11. Method for improving the dispersibility in a hot aqueous liquid of an amylaceous product by mixing said product in powder form with not more than 2.0 wt% of an alkaline or alkaline-earth stearate at a temperature of 130 to 210°C.

## Patentansprüche

1. Verdickungsmittelpräparat für Lebensmittel, das ein Stärkeprodukt in Pulverform aufweist, das mit einem Alkali- oder Erdalkali-Stearat überzogen ist, wobei der prozentuale Gewichtsanteil des Stearats nicht mehr als 2,0 Gew.-% des Präparats beträgt, wobei das Stärkeprodukt Kartoffelstärke, modifizierte Kartoffelstärke, Maisstärke, modifizierte Maisstärke, Weizenmehl, Reismehl oder eine Mischung davon ist.

2. Verdickungsmittel nach Anspruch 1, wobei das Stearat Magnesiumstearat oder Calciumstearat ist.

3. Verdickungsmittel nach einem der Ansprüche 1 oder 2, das 0,5 bis 1,5 Gew.-% Mg-Stearat oder 0,3 bis 0,75 Gew.-% Ca-Stearat aufweist, wenn das Stärkeprodukt Kartoffelstärke ist.

4. Verdickungsmittel nach irgendeinem der Ansprüche 1 oder 2, das 0,5 bis 1,5 Gew.-% Mg-Stearat oder 0,5 bis 1,9 Gew.-% Ca-Stearat aufweist, wenn das Stärkeprodukt Maisstärke ist.

5. Verdickungsmittel nach einem der Ansprüche 1 bis 4, das außerdem bis zu etwa 5 Gew.-% Fett und/oder Emulgator aufweist.

6. Verfahren zur Herstellung des Verdickungsmittelpräparats nach einem der Ansprüche 1 bis 5, das das Vermischen des Stärkeprodukts in Pulverform mit nicht mehr als 2,0 Gew.-% Alkali- oder Erdalkali-Stearat bei einer Temperatur von 30 bis 210 °C, das Vermahlen und das Sieben des auf diese Weise erhaltenen Präparats umfasst.

7. Verfahren nach Anspruch 6, wobei das Vermischen in einem Extruder bei einer Temperatur von 130 bis 210 °C durchgeführt wird.

8. Verfahren nach Anspruch 7 zur Herstellung eines Verdickungsmittelpräparats nach Anspruch 4, wobei die Temperatur von 150 bis 190 °C beträgt.

9. Verfahren nach Anspruch 7 zur Herstellung eines Verdickungsmittelpräparats nach Anspruch 5, wobei die Temperatur für trockene Maisstärke von 190 bis 210 °C beträgt, für Maisstärke eines mittleren Feuchtigkeitsgehalts von 170 bis 190 °C beträgt und für Stärke mit einem hohen Feuchtigkeitsgehalt von 130 bis 170 °C.

10. Verfahren nach Anspruch 8, wobei das Vermischen in einem Mischer bei einer Temperatur von 30 bis 150 °C, vorzugsweise von 50 bis 100 °C, oder in einem Reaktor mit einem Schaufelrotor bei einer Temperatur von 100 bis 180 °C erfolgt.

11. Verfahren zur Verbesserung der Dispergierbarkeit eines Stärkeprodukts in einer heißen wäßrigen Flüssigkeit durch Vermischen des Produkts in Pulverform mit nicht mehr als 2 Gew.-% eines Alkali- oder Erdalkali-Stearats bei einer Temperatur von 130 bis 210 °C.

## Revendications

1. Préparation épaississante pour aliments, comprenant un produit amylacé sous forme de poudre qui est enrobé d'un stéarate alcalin ou alcalino-terreux, le pourcentage en poids dudit stéarate ne dépassant pas 2,0 % en poids de la préparation, dans laquelle le produit amylacé est de l'amidon de pomme de terre, de l'amidon de pomme de terre modifié, de l'amidon de maïs, de l'amidon de maïs modifié, de la farine de blé, de la farine de riz ou un mélange de ceux-ci.

2. Épaississant selon la revendication 1, dans lequel le stéarate est le stéarate de magnésium ou le stéarate de calcium.

3. Épaississant selon l'une des revendications 1 et 2, qui comprend 0,5 à 1,5 % en poids de stéarate de Mg ou 0,3 à 0,75 % en poids de stéarate de Ca, quand le produit amylacé est de l'amidon de pomme de terre.

4. Épaississant selon l'une des revendications 1 et 2, qui comprend 0,5 à 1,5 % en poids de stéarate de Mg ou 0,5 à 1,0 % en poids de stéarate de Ca, quand le produit amylacé est de l'amidon de maïs.

5. Épaississant selon l'une des revendications 1 à 4, qui comprend en outre jusqu'à environ 5 % en poids de matière grasse et/ou d'émulsifiant.

6. Procédé pour la production de la préparation épaississante selon l'une des revendications 1 à 5, qui comprend le mélange du produit amylacé sous forme de poudre avec au plus 2,0 % en poids de stéarate alcalin ou alcalino-terreux, à une température de 30 à 210°C, le broyage et le tamisage de la préparation ainsi obtenue.

7. Procédé selon la revendication 6, dans lequel le mélange s'effectue dans une extrudeuse à une température de 130 à 210°C.

8. Procédé selon la revendication 7, pour la production d'une préparation épaississante telle que définie dans la revendication 4, dans lequel la température va de 150 à 190°C.

9. Procédé selon la revendication 7, pour la production d'une préparation épaississante telle que définie dans la revendication 5, dans lequel la température va de 190 à 210°C pour un amidon de maïs sec, de 170 à 190°C pour un amidon de maïs à humidité moyenne et de 130 à 170°C pour un amidon à forte humidité.

10. Procédé selon la revendication 6, dans lequel le mélange s'effectue dans un malaxeur à une température de 30 à 150°C, préférablement de 50 à 100°C, ou dans un réacteur à pales rotatives à une température de 100 à 180°C.

11. Méthode pour améliorer la dispersibilité dans un liquide aqueux chaud d'un produit amylacé en mélangeant ledit produit sous forme de poudre avec au plus 2,0 % en poids d'un stéarate alcalin ou alcalino-terreux à une température de 130 à 210°C.
